# EUROPÄISCHE PATENTSCHRIFT

(11) **EP 2 287 022 B1**
(45) Veröffentlichungstag und Bekanntmachung des Hinweises auf die Patenterteilung: **26.06.2013**
(21) Anmeldenummer: 10007777.5
(22) Anmeldetag: 27.07.2010
(51) Int. Cl.: B60C 23/04

(54) **Verfahren und System zur Reifendrucküberwachung**
Tyre pressure monitoring method and system
Procédé et système de contrôle de la pression des pneus

(30) Priorität: 19.08.2009 DE 102009038100
(43) Veröffentlichungstag der Anmeldung: 23.02.2011
(60) Teilanmeldung: 12188425.8
(73) Patentinhaber: Huf Hülsbeck & Fürst GmbH & Co. KG, 42551 Velbert (DE)
(72) Erfinder: Wagner, Markus, 71638 Ludwigsburg (DE); Sandrock, Karsten, 75015 Bretten (DE)
(74) Vertreter: Mommer, Niels

(56) Entgegenhaltungen:
- DE-A1-102007 061 925
- US-A1- 2006 079 190

## Beschreibung

Die Erfindung geht aus von einem Verfahren mit den im Oberbegriff des Anspruchs 1 angegebenen Merkmalen, wie es aus der US 2006/079190 A1 bekannt ist.

Zur Überwachung des Reifendrucks werden bei Kraftfahrzeugen Geräte verwendet, die einen Sensor zur Druckmessung und einen Sender zum drahtlosen Übermitteln von Druckinformationen aufweisen. Diese Geräte werden im Allgemeinen als Radelektroniken bezeichnet und in den Luftreifen angeordnet. Radelektroniken können beispielsweise an einem Ventilfuß oder an der Felge befestigt werden.

Die von den Radelektroniken gesendeten Druckinformationen können mit einem im oder am Fahrzeug montierten Empfänger empfangen werden. Ein zu geringer Luftdruck in einem Fahrzeugreifen oder ein gefährlicher Druckabfall können einem Fahrer mit derartigen Reifendrucküberwachungssystemen angezeigt werden. Besonders vorteilhaft sind Radelektroniken, deren Sendetätigkeit durch Empfang eines Abfragesignals ausgelöst werden kann. Bei derartigen Radelektroniken kann sich eine am Fahrzeug angeordnete Zentraleinheit bei Bedarf Informationen zu den einzelnen Fahrzeugreifen durch Abfragen der Radelektroniken besorgen.

Unabhängig davon, ob Radelektroniken ihren Energiebedarf aus einer Batterie decken oder einen mechanisch-elektrischen oder thermo-elektrischen Wandler enthalten, ist ein möglichst sparsamer Energieverbrauch ein ständiges Ziel bei der Entwicklung und Verbesserung von Radelektroniken.

Aufgabe der vorliegenden Erfindung ist es deshalb einen Weg aufzuzeigen, wie der Energieverbrauch einer Radelektronik reduziert werden kann.

Diese Aufgabe wird durch ein Verfahren mit den im Anspruch 1 angegebenen Merkmalen sowie durch ein Reifendrucküberwachungssystem gemäß Anspruch 15 gelöst. Vorteilhafte Weiterbildungen der Erfindung sind Gegenstand von Unteransprüchen.

Bei einem erfindungsgemäßen Verfahren wird als Abfragesignal eine Pulsfolge verwendet, die vor einem Befehlsabschnitt, der eine Sendeanweisung codiert, einen Einstellabschnitt mit mehreren Pulsen enthält. Auf diese Weise kann in der Radelektronik ein Verstärkungsfaktor, mit dem die Pulse des Abfragesignals verstärkt werden, auf ein für den Empfang und die Auswertung des Befehlsabschnitts erforderliches Maß eingestellt werden. Die Empfangsbedingungen für das Abfragesignal hängen nämlich von einer Reihe von Faktoren, unter anderem der fahrzeugspezifischen Geometrie des Radkastens, ab und unterliegen deshalb erheblichen Schwankungen. Mit dem erfindungsgemäßen Verfahren kann die Verstärkung auf das für die konkret vorliegenden Empfangsbedingungen notwendige Maß reduziert werden. Dies ermöglicht einen sparsameren Betrieb der Radelektronik.

Der Einstellabschnitt enthält bevorzugt drei bis zehn, besonders bevorzugt drei bis sieben Pulse. Diese Maßnahme hat den Vorteil, dass einerseits genügend viele Pulse zur Verfügungen stehen, um den nötigen Verstärkungsfaktor zuverlässig zu ermitteln, andererseits eine unnötig lange Empfangstätigkeit vermieden werden kann.

Die Empfangsbedingungen und damit die nötige Verstärkung kann besonders gut an den Flanken von Pulsen ermittelt werden. Für den Einstellabschnitt sind deshalb kurze Pulse vorteilhaft. Bevorzugt sind die Pulse des Einstellabschnitts im Rahmen der Systemgenauigkeit alle gleich lang. Beispielsweise können die Pulse des Einstellabschnitts alle eine Länge haben, die bei der im Befehlabschnitt enthaltenen Bitfolge den Wert Null codieren.

Bevorzugt enthält der Befehlsabschnitt Pulse, die länger als die Pulse des Einstellabschnitts sind, insbesondere Pulse, die mindestens doppelt so lang wie die Pulse des Einstellabschnitts sind. Der Befehlsabschnitt kann dabei durchaus auch Pulse enthalten, die ebenso lang wie oder sogar kürzer als die Pulse des Einstellabschnitts sind. Beispielsweise kann der Befehlsabschnitt eine Bitfolge sein, wobei lange Pulse, den Wert 1 und kurze Pulse den Wert Null codieren. Die kurzen Pulse haben in diesem Fall bevorzugt dieselbe Länge wie die Pulse des Einstellabschnitts.

Erfindungsgemäß enthält die Pulsfolge zwischen dem Einstellabschnitt und dem Befehlsabschnitt einen Startpuls, der mindestens doppelt so lang, vorzugsweise mindestens dreimal so lang, insbesondere mindestens viermal so lang, wie die in dem Einstellabschnitt enthaltenen Pulse ist. Bevorzugt ist der Startpuls auch länger als die in dem Befehlsabschnitt enthaltenen Pulse. Auf diese Weise kann verhindert werden, dass der letzte Puls des Einstellabschnitts versehentlich als ein Puls des Befehlsabschnitts interpretiert wird. Beispielsweise kann der Startpuls länger als ein Puls, der eine 1 codiert, und auch länger als ein Puls, der eine 0 codiert, sein. Bevorzugt ist der Startpuls wenigstens so lang wie die Summe der Pulsdauer eines Pulses des Einstellabschnitts und eines Pulses des Befehlsabschnitts. Beispielsweise kann der Startpuls ebenso lang wie, bevorzugt länger als, die Summe eines eine 0 und eines eine 1 darstellenden Pulses des Befehlsabschnitts sein.

Eine weitere vorteilhafte Weiterbildung der Erfindung sieht vor, dass die Pulsfolge vor dem Einstellabschnitt einen Weckpuls enthält. Der Weckpuls ist bevorzugt länger als der Einstellabschnitt. Mit einem Weckpuls kann vorteilhaft erreicht werden, dass eine Radelektronik nicht ständig empfangsbereit sein muss. Indern die ein Abfragesignal bildende Pulsfolge an ihrem Beginn einen Weckpuls enthält, genügt es, wenn eine Radelektronik in regelmäßigen Abständen überprüft, ob an dem Empfänger eine für einen Puls charakteristische Intensität anliegt. Ist dies der Fall bleibt der Empfänger empfangsbereit, um die nachfolgenden Abschnitte des Abfragesignals zu empfangen. Ist dies nicht der Fall, kann die Radelektronik wieder in einen energiesparenden Zustand übergehen. Bevorzugt ist der Weckpuls länger als die Summe der Dauer des Befehlsabschnitts und des Einstellabschnitts. Besonders bevorzugt macht die Dauer des Weckpulses mehr als die Hälfte, beispielsweise mindestens zwei Drittel, der Dauer der Pulsfolge aus.

Bevorzugt ist der in der Radelektronik enthaltene Sender ein HF-Senser, also ein Hochfrequenz-Sender. Druckinformationen werden von der Radelektronik also als Hochfrequenzsignale gesendet. Die Übertragung erfolgt besonders bevorzugt bei mehr als 100 MHz, beispielsweise bei 433 MHz, dem so genannten ISM-Band, oder im 315 MHz Bereich oder im 868 MHz Bereich. Für die Abfragesignale wird bevorzugt der Niederfrequenzbereich (LF) verwendet. Besonders geeignet ist insbesondere der Bereich zwischen 50 kHz und 300 kHz. Die Pulsfolge des Abfragesignals kann erzeugt werden, indem eine Trägerwelle in dem genannten Frequenzbereich pulsbreitenmoduliert wird, beispielsweise durch An- und Abschalten des Senders.

Weitere Einzelheiten und Vorteile der Erfindung werden an einem Ausführungsbeispiel unter Bezugnahme auf die beigefügte Zeichnung erläutert. Es zeigen:
- Figur 1: eine schematische Darstellung eines Reifendrucküberwachungssys- tems; und
- Figur 2: eine schematische Darstellung der Pulsfolge eines Abfragesignals.

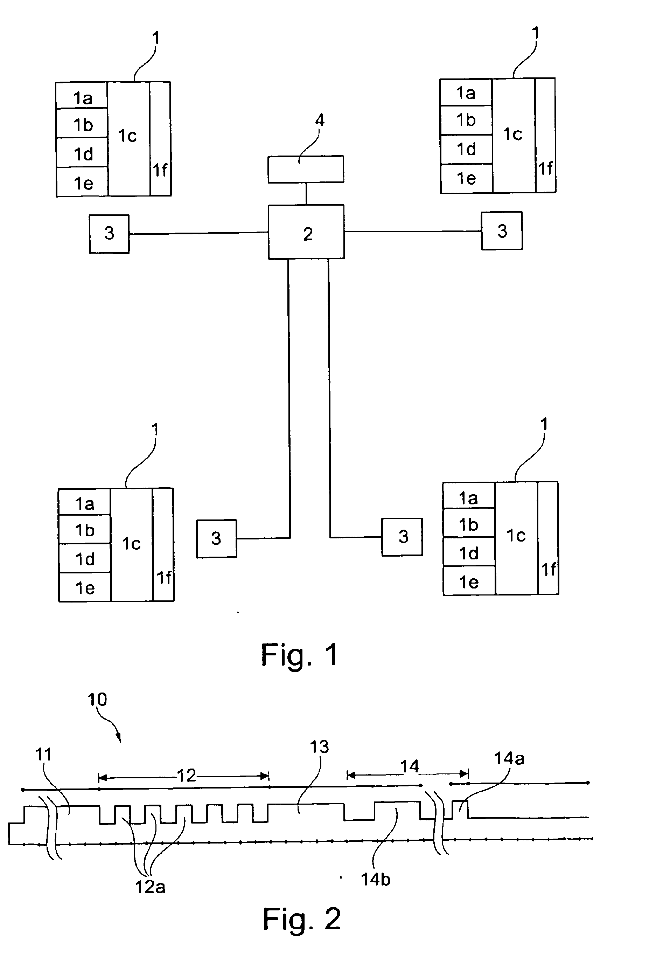

Das in Figur 1 dargestellte System zum Überwachen des Reifendrucks in Fahrzeugen umfasst mehrere Radelektroniken 1, die jeweils in einem der Luftreifen eines Fahrzeugs angeordnet werden und einen Drucksensor 1 a, einen Temperatursensor 1b, eine Steuereinheit 1c, eine Stromquelle 1d, beispielsweise eine Batterie oder einen Generator, einen HF-Sender 1e und einen LF-Empfänger 1f aufweisen. Zu dem System gehören außerdem eine ortsfest am Fahrzeug angeordnete Zentraleinheit 2, an die Abfragesender 3 und wenigstens ein HF-Empfänger 4 angeschlossen sind.

Da die Abfragesender 3 LF-Signale mit einer Trägerfrequenz von beispielsweise 50 kHz bis 300 kHz, insbesondere 100 kHz bis 150 kHz aussenden, haben die Abfragesignale 10 eine verhältnismäßig kurze Reichweite. Bevorzugt ist deshalb jedem Ende einer Fahrzeugachse ein Abfragesender 3 zugeordnet, um die Radelektroniken 1 der in den betreffenden Enden der Fahrzeugachsen angeordneten Räder abzufragen.

Druckinformationen werden von den Radelektroniken 1 dagegen als HF-Signale ausgesandt. Die verwendete HF-Trägerfrequenz beträgt bevorzugt mindestens 100 MHz. Gebräuchlich für Radelektroniken 1 sind beispielsweise 433 MHz, 315 MHz oder 868 MHz. Die von den Radelektroniken 1 ausgesandten Signale haben deshalb eine größere Reichweite, so dass in der Regel an einziger an die Zentraleinheit 2 angeschlossener Empfänger 4 genügt. Es ist aber auch möglich, an die Zentraleinheit 2 mehrere Empfänger 4 anzuschließen und beispielsweise jeder Achse oder sogar jeder Radposition einen eignen Empfänger 4 zuzuordnen.

Durch Empfang eines Abfragesignals 10 wird eine Sendetätigkeit der Radelektroniken 1 ausgelöst. Das Abfragesignal 10 wird als eine Pulsfolge gesendet, die schematisch in Figur 2 dargestellt ist.

Das Abfragesignal 10 beginnt mit einem Weckpuls 11. Auf den Weckpuls 11 folgt ein Einstellabschnitt 12, der mehrere, beispielsweise fünf, Pulse 12a, enthält. Auf den Einstellabschnitt folgt ein Startpuls 13, an den ein Befehlsabschnitt 14 anschließt, der eine Sendeanweisung für die Radelektronik 1 codiert. Der Befehlsabschnitt 14 kann beispielsweise die Radelektronik 1 zum Aussenden einer aktuellen Druckinformation veranlassen. Eine weitere Möglichkeit ist, dass der Befehlsabschnitt 14 die Radelektronik 1 veranlasst, eine Typeninformation, beispielsweise die Version der in ihr enthaltenen Software auszusenden.

Der Weckpuls 11 macht bei dem dargestellten Ausführungsbeispiel mehr als die Hälfte der Dauer der Pulsfolge 10 aus. Der Weckpuls 11 ist länger als der Einstellabschnitt 12 und auch länger als der Befehlsabschnitt 14. Bevorzugt ist der Weckpuls 11 länger als die Summe der Dauer des Befehlsabschnitts 14 und der Dauer des Einstellabschnitts 12. Je länger der Weckpuls 11 ist, desto gröber kann die Abtastung in der Radelektronik gestaltet werden. Mit zunehmender Länge des Weckpulses sinken deshalb der Energiebedarf und auch die Störempfindlichkeit der Radelektronik. Eine Obergrenze für die maximale Länge des Weckpulses wird durch die gewünschte Reaktionszeit des Systems begrenzt.

Die Radelektronik 1 aktiviert periodisch den Empfänger 1f, um zu prüfen, ob ein Abfragesignal 10 ansteht. Indem die Zeitabstände, in denen der Empfänger 1f der Radelektronik 1 aktiviert wird, kürzer als der Weckpuls 11 gewählt werden, kann mit geringem Energieaufwand erreicht werden, dass die Radelektronik 1 bei dem Einstellabschnitt 12 des Abfragesignals 10 empfangsbereit ist.

Um zu ermitteln, ob ein Weckpuls 11 ansteht, genügt es den Empfänger 1f der Radelektronik 1 für sehr kurze Zeit zu aktivieren, beispielsweise für ½ ms oder weniger. Die dafür erforderliche Energie ist sehr gering, da der Empfänger 1f der Radelektronik 1 folglich die meiste Zeit abgeschaltet ist. Der Empfänger 1f der Radelektronik 1 wird bevorzugt in Zeitabständen aktiviert, die mindestens 2/3, bevorzugt mindestens ¾, der Dauer des Weckpulses 11 betragen, aber kleiner als die Dauer des Weckpulses 11 sind.

In dem dargestellten Ausführungsbeispiel wird der Empfänger alle 32 ms für weniger als ½ ms aktiviert. Die Dauer des Weckpulses 11 beträgt bei dem dargestellten Ausführungsbeispiel 42 ms. Die Dauer des Weckpulses 11 kann ohne Schwierigkeiten auch länger oder kürzer gewählt werden. Dabei gilt jedoch, dass die Radelektronik 1 umso häufiger aktiviert werden muss, je kürzer der Weckpuls 11 ist. Ein längerer Weckpuls 11 hat den Vorteil eines sparsameren Betriebs der Radelektronik 1, führt jedoch auch dazu, dass entsprechend mehr Zeit benötigt wird, um eine Druckinformation von der Radelektronik 1 abzufragen. Ein besonders vorteilhafter Bereich für die Dauer des Weckpulses 11 liegt zwischen 30 und 200 ms, insbesondere 35 bis 100 ms.

An den Weckpuls 11 schließt der Einstellabschnitt 12 mit mehreren Pulsen 12a an. Bevorzugt enthält der Einstellabschnitt 12 drei bis zehn, besonders bevorzugt drei bis sieben Pulse 12a. Mittels der in dem Einstellabschnitt 12 enthaltenen Pulse 12a wird die Signalverstärkung an die vorherrschenden Empfangsbedingungen angepasst, so dass der Befehlsabschnitt 14 des Abfragesignals 10 von der Radelektronik 1 verstanden und fehlerfrei ausgewertet werden kann. Indem der Verstärkungsfaktor eines in dem Empfänger 1f der Radelektronik 1 enthaltenen Verstärkers auf das notwendige Maß eingestellt wird, kann ein besonders energiesparender Betrieb der Radelektronik 1 verwirklicht werden, da eine unnötig hohe Signalverstärkung vermieden werden kann.

Die Pulse 12a des Einstellabschnitts 12 sind bevorzugt im Rahmen der Systemgenauigkeit gleich lang. Beispielsweise können die Pulse 12a des Einstellabschnitts eine Länge haben, die in dem Befehlsabschnitt 14 verwendet wird, um eine Null darzustellen.

Zwischen dem Einstellabschnitt 12 und dem Befehlsabschnitt 14 enthält die Pulsfolge den Startpuls 13. Der Startpuls 13 verhindert, dass Pulse 12a des Einstellabschnitts 12 von der Radelektronik 1 als Teil des Befehlsabschnitts 14 interpretiert werden. Der Startpuls 13 ist mindestens doppelt so lang, vorzugsweise mindestens dreimal so lang, insbesondere mindestens viermal so lang, wie in dem Einstellabschnitt 12 enthaltenden Pulse 12a. Bei dem dargestellten Ausführungsbeispiel ist der Startpuls 13 fünfmal so lang, wie die Pulse 12a des Einstellabschnitts 12. Der Startpuls 13 ist bevorzugt auch länger als die in dem Befehlsabschnitt 14 enthaltenen Pulse 14a, 14b. Besonders bevorzugt ist der Startpuls 13 wenigstens so lang, wie die Summe der Pulsdauer eines Pulses 12 des Einstellabschnitts 12 und eines Pulses 14a, 14b des Befehlsabschnitts 14. Günstig ist im Allgemeinen, wenn der Startpuls 13 drei- bis zehnmal so lang wie ein Puls 12a des Einstellabschnitts 12, insbesondere vier- bis sechsmal so lang wie ein Puls 12a des Einstellabschnitts 12, ist.

Auf den Startpuls 13 folgt der Befehlsabschnitt 14. Der Befehlsabschnitt 14 enthält bevorzugt eine Bitfolge in Form von kurzen Pulsen 14a und langen Pulsen 14b. Dabei können kurze Pulse 14a eine Null und lange Pulse 14b eine Eins kodieren. Wie bereits erwähnt können die kurzen Pulse 14a des Befehlsabschnitts 14 in ihrer Länge den Pulsen 12a des Einstellabschnitts 12 entsprechen.

Die vorstehend beschriebene Radelektronik 1 kann einen Rollschalter enthalten, der durch während der Fahrt auftretende Beschleunigungskräfte geschlossen wird. Vorteilhaft kann die Radelektronik 1 dann während der Fahrt selbsttätig in vorgegebenen Zeitintervallen Druckmessungen vornehmen. Stellt die Radelektronik 1 dabei einen gefährlichen Druckabfall fest, kann eine entsprechende Druckinformation auch ohne Anforderung durch ein Abfragesignal 10 gesendet werden. Radelektroniken 1, die sowohl durch ein Abfragesignal 10 zum Senden veranlasst werden können, als auch zu einem selbsttätigen Senden in der Lage sind, sind beispielsweise aus der DE 102 17 239 A1 bekannt.

### Bezugszahlen

- 1: Radelektronik
- 1a: Drucksensor
- 1b: Temperatursensor
- 1c: Steuereinheit
- 1d: Stromquelle
- 1e: HF-Sender
- 1f: LF-Empfänger
- 2: Zentraleinheit
- 3: Abfragesender
- 4: HF-Empfänger
- 5: Einstellabschnitt
- 10: Abfragesignal
- 11: Weckpuls
- 12: Einstellabschnitt
- 12a: Pulse
- 13: Startpuls
- 14: Befehlsabschnitt
- 14a: kurzer Puls
- 14b: langer Puls

## Patentansprüche

1. Verfahren zum Überwachen des Luftdrucks in einem Fahrzeugreifen mittels einer Radelektronik (1), die einen Drucksensor (1a) zum Messen des in dem Reifen herrschenden Luftdrucks, einen Sender (1e) zum Senden von Druckinformationen und einen Empfänger (1f) zum Empfangen von Abfragesignalen (10) aufweist, wobei eine Sendetätigkeit der Radelektronik (1) durch Empfang eines Abfragesignals (10) ausgelöst wird, das als eine Pulsfolge gesendet wird, die einen Befehlsabschnitt (14), enthält, der eine Sendeanweisung für die Radelektronik (1) codiert, und
wobei die Pulsfolge vor dem Befehlsabschnitt (14) einen Einstellabschnitt (12) mit mehreren Pulsen (12a) enthält,
**dadurch gekennzeichnet, dass** die Pulsfolge (10) zwischen dem Einstellabschnitt (12) und dem Befehlsabschnitt (14) einen Startpuls (13) enthält, der mindestens doppelt so lang wie die in dem Einstellabschnitt (12) enthaltenen Pulse (12a) ist.

2. Verfahren nach Anspruch 1, **dadurch gekennzeichnet, dass** der Befehlsabschnitt (14) Pulse (14b) enthält, die länger als die in dem Einstellabschnitt (12) enthaltenen Pulse (12a) sind.

3. Verfahren nach einem der vorstehenden Ansprüche, **dadurch gekennzeichnet, dass** der Befehlsabschnitt (14) Pulse (14b) enthält, die wenigstens doppelt so lang wie die Pulse (12a) des Einstellabschnitts (12) sind.

4. Verfahren nach einem der vorstehenden Ansprüche, **dadurch gekennzeichnet, dass** der Befehlsabschnitt (14) eine Bitfolge in Form von kurzen und langen Pulsen (14a, 14b) enthält.

5. Verfahren nach Anspruch 4, **dadurch gekennzeichnet, dass** der Einstellabschnitt (12) als eine Folge von kurzen Pulsen (12a) gebildet ist, deren Länge den kurzen Pulsen (14a) des Befehlsabschnitts (14) entspricht.

6. Verfahren nach einem der vorstehenden Ansprüche, **dadurch gekennzeichnet, dass** der Einstellabschnitt (12) drei bis zehn, vorzugsweise drei bis sieben Pulse (12a), enthält.

7. Verfahren nach einem der vorstehenden Ansprüche, **dadurch gekennzeichnet, dass** die Pulsfolge (10) zwischen dem Einstellabschnitt (12) und dem Befehlsabschnitt (14) einen Startpuls (13) enthält, der mindestens dreimal so lang, vorzugsweise mindestens viermal so lang, wie die in dem Einstellabschnitt (12) enthaltenen Pulse (12a) ist.

8. Verfahren nach Anspruch 7, **dadurch gekennzeichnet, dass** der Startpuls (13) länger als die in dem Befehlsabschnitt (14) enthaltenen Pulse (14a, 14b) ist.

9. Verfahren nach Anspruch 7 oder 8, **dadurch gekennzeichnet, dass** der Startpuls (14a) wenigstens so lang wie die Summe der Pulsdauer eines Pulses (12a) des Einstellabschnitts (12) und eines Pulses (14a, 14b) des Befehlsabschnitts (14) ist.

10. Verfahren nach einem Ansprüche 7 bis 9, **dadurch gekennzeichnet, dass** der Startpuls (13) drei bis zehnmal so lang wie ein Puls (12a) des Einstellabschnitts (12), vorzugsweise vier bis sechsmal so lang wie ein Puls (12a) des Einstellabschnitts (12), ist.

11. Verfahren nach einem der vorstehenden Ansprüche, **dadurch gekennzeichnet, dass** die Pulsfolge (10) vor dem Einstellabschnitt (12) einen Weckpuls (11) enthält.

12. Verfahren nach Anspruch 11, **dadurch gekennzeichnet, dass** der Weckpuls (11) länger als der Einstellabschnitt (12) ist.

13. Verfahren nach Anspruch 11 oder 12, **dadurch gekennzeichnet, dass** der Weckpuls (11) länger als der Befehlsabschnitt (14) ist.

14. Reifenddrucküberwachungssystem mit
einer Radelektronik (1), die einen Drucksensor (1 a) zum Messen des in dem Reifen herrschenden Luftdrucks, einen Sender (1e) zum Senden von Druckinformationen und einen Empfänger (1f) zum Empfangen von Abfragesignalen (10) aufweist,
einem Abfragesender (3) zum Aussenden von Abfragesignalen (10), und
einem Empfänger (4) zum Empfangen von Druckinformationen,
wobei eine Sendetätigkeit der Radelektronik (1) durch Empfang eines Abfragesignals (10) ausgelöst wird, das als eine Pulsfolge gesendet wird, die einen Befehlsabschnitt (14), enthält, der eine Sendeanweisung für die Radelektronik (1) codiert, und
wobei die Pulsfolge vor dem Befehlsabschnitt (14) einen Einstellabschnitt (12) mit mehreren Pulsen (12a) enthält,
**dadurch gekennzeichnet, dass** die Pulsfolge (10) zwischen dem Einstellabschnitt (12) und dem Befehlsabschnitt (14) einen Startpuls (13) enthält, der mindestens doppelt so lang wie die in dem Einstellabschnitt (12) enthaltenen Pulse (12a) ist.

15. System nach Anspruch 14, **dadurch gekennzeichnet, dass** der Empfänger (1f)
der Radelektronik (1) einen Verstärker enthält, wobei mittels der in dem Einstellabschnitt (12) enthaltenen Pulse (12a) ein zum Auswerten des Befehlsabschnitts (14) erforderlicher Verstärkungsfaktor eingestellt wird.

## Claims

1. Method for monitoring air pressure in vehicle tires using wheel electronics (1), which comprise a pressure sensor (1 a) for measuring the air pressure present in the tire, a transmitter (1e) for transmitting pressure information, and a receiver (1f) for receiving interrogation signals (10),
a transmission activity of the wheel electronics (1) being triggered by the reception of an interrogation signal (10), which is transmitted as a pulse train comprising a command section (14) that encodes a transmission instruction for the wheel electronics (1),
the pulse train comprising an adjustment section (12) having several pulses (12a) before the command section (14), **characterized in that** between the adjustment section (12) and the command section (14), the pulse train (10) comprises a start pulse (13), which is at least twice as long as the pulses (12a) present in the adjustment section (12).

2. Method according to claim 1, **characterized in that** the command section (14) comprises pulses (14b) which are longer than the pulses (12a) present in the adjustment section (12).

3. Method according to any one of the preceding claims, **characterized in that** the command section (14) comprises pulses (14b) which are at least twice as long than the pulses (12a) of the adjustment section (12).

4. Method according to any one of the preceding claims, **characterized in that** the command section (14) comprises a bit string in the form of short and long pulses (14a, 14b).

5. Method according to claim 4, **characterized in that** the adjustment section (12) is formed as a train of short pulses (12a), the lengths of which correspond to the short pulses (14a) of the command section (14).

6. Method according to any one of the preceding claims, **characterized in that** the adjustment section (12) comprises three to ten, preferably three to seven pulses (12a).

7. Method according to any one of the preceding claims, **characterized in that** between the adjustment section (12) and the command section (14), the pulse train (10) comprises a start pulse (13), which is at least thrice as long as the pulses (12a) present in the adjustment section (12), preferably at least four times as long.

8. Method according to claim 7, **characterized in that** the start pulse (13) is longer than the pulses (14a, 14b) of the command section.

9. Method according to claim 7 or 8, **characterized in that** the start pulse (14a) is at least as long as the sum of the pulse durations of a pulse (12a) of the adjustment section (12) and a pulse (14a, 14b) of the command section (14).

10. Method according to claims 7 to 9, **characterized in that** the start pulse (13) is three to ten times as long as a pulse (12a) of the adjustment section (12), preferably four to six times as long as a pulse (12a) of the adjustment section (12).

11. Method according to any one of the preceding claims, **characterized in that** the pulse train (10) comprises a wake-up pulse (11) before the adjustment section (12).

12. Method according to claim 11, **characterized in that** the wake-up pulse (11) is longer than the adjustment section (12).

13. Method according to claim 11 or 12, **characterized in that** the wake-up pulse (11) is longer than the command section (14).

14. Tire pressure monitoring system, comprising
wheel electronics (1) having a pressure sensor (1a) for measuring the air pressure present in the tire, a transmitter (1e) for transmitting pressure information, and a receiver (1f) for receiving interrogation signals (10),
an interrogation transmitter (3) for emitting interrogation signals (10), and
a receiver (4) for receiving pressure information,
a transmission activity of the wheel electronics (1) being triggered by the reception of an interrogation signal (10), which is transmitted as a pulse train comprising a command section (14) that encodes a transmission instruction for the wheel electronics (1),
the pulse train comprising an adjustment section (12) having several pulses (12a) before the command section (14), **characterized in that** between the adjustment section (12) and the command section (14), the pulse train (10) comprises a start pulse (13), which is at least twice as long as the pulses (12a) present in the adjustment section (12.

15. The system according to claim 14, **characterized in that** the receiver (1f) of the wheel electronics (1) comprises an amplifier, wherein the pulses (12a) present in the adjustment section (12) are used to adjust an amplification factor required for evaluating the command section (14).

## Revendications

1. Procédé pour la surveillance de la pression dans un pneu de véhicule automobile, au moyen d'une électronique de roue (1) comportant un capteur de pression (1a) pour mesurer la pression actuelle dans le pneu, un émetteur (1e) pour l'envoi d'informations de pression et un récepteur (1f) pour la réception de signaux de d'interrogation (10), dans lequel une action d'émission de l'électronique de roue (1) est déclenchée par la réception d'un signal d'interrogation (10) envoyé comme une série d'impulsions contenant une section d'ordre (14) codant une instruction d'émission pour l'électronique de roue (1), et
dans lequel la série d'impulsions contient une section de réglage (12) avec plusieurs impulsions (12a), avant la section d'ordre (14),
**caractérisé en ce qu'**entre la section de réglage (12) et la section d'ordre (14), la série d'impulsions (10) contient une impulsion de départ (13) au moins deux fois aussi longue que les impulsions (12a) contenues dans la section de réglage (12).

2. Procédé selon la revendication 1, **caractérisé en ce que** la section d'ordre (14) contient des impulsions (14b) plus longues que les impulsions (12a) contenues dans la section de réglage (12).

3. Procédé selon l'une des revendications précédentes, **caractérisé en ce que** la section d'ordre (14) contient des impulsions (14b) au moins deux fois aussi longues que les impulsions (12a) de la section de réglage (12).

4. Procédé selon l'une des revendications précédentes, **caractérisé en ce que** la section d'ordre (14) contient une série de bits sous la forme d'impulsions courtes et longues (14a, 14b).

5. Procédé selon la revendication 4, **caractérisé en ce que** la section de réglage (12) est constituée comme une série d'impulsions courtes (12a), dont la longueur correspond à celle des impulsions courtes (14a) de la section d'ordre (14).

6. Procédé selon l'une des revendications précédentes, **caractérisé en ce que** la section de réglage (12) contient jusqu'à dix, de préférence de trois à sept impulsions (12a).

7. Procédé selon l'une des revendications précédentes, **caractérisé en ce que** la série d'impulsions (10) entre la section de réglage (12) et la section d'ordre (14) contient une impulsion de départ (13) au moins trois fois aussi longue, de préférence au moins quatre fois aussi longue que les impulsions (12a) contenues dans la section de réglage (12).

8. Procédé selon la revendication 7, **caractérisé en ce que** l'impulsion de départ (13) est plus longue que les impulsions (14a, 14b) contenues dans la section d'ordre (14).

9. Procédé selon la revendication 7 ou 8, **caractérisé en ce que** l'impulsion de départ (14a) est au moins aussi longue que la somme de la durée d'impulsion d'une impulsion (12a) de la section de réglage (12) et d'une impulsion (14a, 14b) de la section d'ordre (14).

10. Procédé selon l'une des revendications 7 à 9, **caractérisé en ce que** l'impulsion de départ (13) est de trois à dix fois plus longue qu'une impulsion (12a) de la section de réglage (12), de préférence de quatre à six fois aussi longue qu'une impulsion (12a) de la section de réglage (12).

11. Procédé selon l'une des revendications précédentes, **caractérisé en ce que** la série d'impulsions (10) avant la section de réglage (12) contient une impulsion de réveil (11).

12. Procédé selon la revendication 11, **caractérisé en ce que** l'impulsion de réveil (11) est plus longue que la section de réglage (12).

13. Procédé selon la revendication 11 ou 12, **caractérisé en ce que** l'impulsion de réveil (11) est plus longue que la section d'ordre (14).

14. Système de surveillance de la pression des pneus, avec une électronique de roue (1) comportant un capteur de pression (1a) pour mesurer la pression actuelle dans le pneu, un émetteur (1e) pour l'envoi d'informations de pression et un récepteur (1f) pour la réception de signaux de d'interrogation (10),
un émetteur d'interrogation (3) pour l'envoi de signaux d'interrogation (10), et
un récepteur (3) pour la réception d'informations de pression,
dans lequel une action d'émission de l'électronique de roue (1) est déclenchée par la réception d'un signal d'interrogation (10) envoyé comme une série d'impulsions contenant une section d'ordre (14) codant une instruction d'émission pour l'électronique de roue (1), et
dans lequel la série d'impulsions avant la section d'ordre (14) contient une section de réglage (12) avec plusieurs impulsions (12a),
**caractérisé en ce que** la série d'impulsions (10) entre la section de réglage (12) et la section d'ordre (14) contient une impulsion de départ (13) au moins deux fois aussi longue que les impulsions (12a) contenues dans la section de réglage (12).

15. Système selon la revendication 14, **caractérisé en ce que** le récepteur (1f) de l'électronique de roue (1) contient un amplificateur, dans lequel un facteur de gain nécessaire à l'évaluation de la section d'ordre (14) est réglé au moyen des impulsions (12a) contenues dans la section de réglage (12).
